# EUROPEAN PATENT APPLICATION

(11) **EP 3 153 949 A1**
(43) Date of publication of application: **12.04.2017**
(21) Application number: 15807452.6
(22) Date of filing: 04.06.2015
(51) Int. Cl.: G06F 3/041, G06F 3/044, G06F 3/046

(54) **MULTI-INPUT PAD FOR SIMULTANEOUSLY SENSING CAPACITIVE TOUCH AND INDUCED ELECTROMAGNETIC FIELD INPUT AND INPUT SYSTEM**

(30) Priority: 09.06.2014 KR 20140069599
(71) Applicant: The Han Inc., Seoul 153-774 (KR)
(72) Inventor: KIM, Sae Young, Seoul 153-774 (KR); AHN, Sang Sup, Seoul 153-774 (KR); RYU, Young Kee, Seoul 121-811 (KR)
(74) Representative: Groth & Co. KB
(86) International application number: PCT/KR2015/005623
(87) International publication number: WO 2015/190753

(57) **Abstract**

A multi-input pad for simultaneously sensing a capacitive touch and an induced electromagnetic field input includes a plurality of first patterns extending in a first direction in a sensing area, a plurality of second patterns extending in a second direction in the sensing area, a plurality of third patterns extending in the second direction in the sensing area, and a common loop surrounding at least a part of the sensing area and to which the other ends of the third patterns are connected. The multi-input pad operating in a capacitive touch sensing mode and an induced electromagnetic field sensing mode may simultaneously sense a capacitive touch and an induced electromagnetic field input.

## Description

### TECHNICAL FIELD

The present inventive concept relates to a multi-input pad for simultaneously sensing a finger touch and manipulation of an electronic pen, and an input system, and more particularly, to a multi-input pad for simultaneously sensing a capacitive touch and an induced electromagnetic field input, and an input system comprising the same.

### BACKGROUND ART

As a conventional technology of simultaneously sensing a finger touch and manipulation of an electronic pen (e-pen) emitting an induced electromagnetic field, Korean Patent No. 1027672 entitled Tablet for simultaneously sensing positions of a finger and a pointer with a resonance circuit is presented.

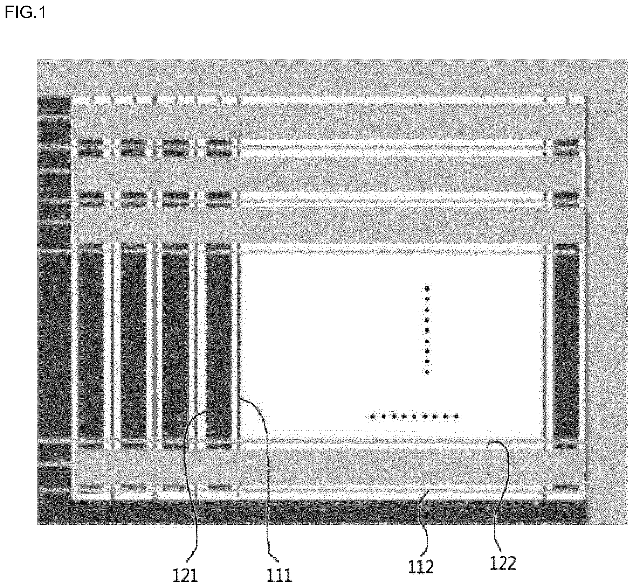

In the conventional technology, as shown in FIG. 1, by overlapping a substrate where a first line antenna 111 and a first line electrode 121 are formed and a substrate where a second line antenna 112 and a second line electrode 122 are formed, a coordinate along a first direction and a second direction may be detected.

Meanwhile, to sense a finger touch, for example, a TX signal that is a certain alternating voltage is applied to a first line electrode in a first direction and an RX signal by a finger is received by a second line electrode in a second direction.

In a general pattern configuration, an electrode for a TX signal is configured to be as large as possible to generate a strong alternating electric field by the TX signal. Accordingly, in order to form each of the first line electrodes to which the TX signal is applied as large as possible, the first line electrodes are densely configured to have an interval as small as possible with respect to the neighboring first line electrodes.

In order to implement a tablet for simultaneously sensing a finger touch and manipulation of an e-pen according to the conventional technology, a first line antenna pattern is arranged between first line electrode patterns for the TX signal. However, in this structure, since the first line antenna pattern is located between the first line electrode patterns and these patterns essentially requires a certain interval, it is unavoidable that the width of the first line electrode pattern may be relatively reduced to a degree.

Accordingly, the strength of the TX signal in the first line electrode decreases so that sensitivity of sensing a capacitive finger touch may be limited.

Furthermore, arranging the first line antenna pattern between the first line electrode patterns signifies an increase in the number of arranged patterns. As the number of patterns increases, the number of connection lines provided to connect the patterns to an external device increases. Since the connection lines are not used for sensing a finger or an e-pen, they extend out of the patterns and form a bezel area.

Accordingly, since a larger bezel area is needed as the number of connection lines increases, it is disadvantageous to a current trend of reducing a bezel width.

### DETAILED DESCRIPTION OF THE INVENTIVE CONCEPT

### TECHNICAL PROBLEM

The present inventive concept provides a multi-input pad for simultaneously sensing a capacitive touch and an induced electromagnetic field input, whereby solving the above-mentioned problem that, as a line antenna is arranged between line electrodes for a TX signal to simultaneously sense a capacitive finger touch and an induced electromagnetic field type electronic pen (e-pen) input, the width of a line electrode decreases and an interval between the line electrodes increases so that sensitivity of a touch sense is reduced.

The present inventive concept provides a multi-input pad capable of sensing a position of an e-pen by using an induced electromagnetic field while maintaining performance of a capacitive finger touch sense without decreasing the width of an electrode for a TX signal.

The present inventive concept provides a multi-input pad for simultaneously sensing a capacitive touch and an induced electromagnetic field input, in which a bezel width is reduced by reducing the number of connection lines provided outside a pattern.

### ADVANTAGEOUS EFFECTS

In a multi-input pad for simultaneously sensing a capacitive touch and an induced electromagnetic field input according to the present inventive concept, first patterns used for sensing a capacitive touch according to application of a TX signal are also used for sensing an electronic pen that emits an induced electromagnetic field.

Accordingly, since the size of first patterns does not need to be decreased, sensitivity of capacitive touch sensing may not be lowered. Furthermore, since the number of connection lines of the first patterns is not increased, the bezel area does not need to be increased.

Furthermore, since each pattern may be implemented on a substrate in various methods, the multi-input pad may be easily manufactured.

### DESCRIPTION OF THE DRAWINGS

FIG. 1 illustrates a shape of a pattern along a first direction and a second direction used for simultaneously sensing positions of a finger and a pointer, according to a conventional technology.
FIG. 2 illustrates a structure of a multi-input pad for simultaneously sensing a capacitive touch and an induced electromagnetic field input, according to an embodiment.
FIG. 3 illustrates a structure of a multi-input pad for simultaneously sensing a capacitive touch and an induced electromagnetic field input, according to another embodiment.
FIG. 4 illustrates a structure of a multi-input pad for simultaneously sensing a capacitive touch and an induced electromagnetic field input, according to another embodiment.
FIG. 5 illustrates an overlapping shape of patterns of a multi-input pad, according to an embodiment.
FIG. 6 illustrates an arrangement of first patterns and connection lines from opposite ends of each of the first patterns to a controller and a switching device, in the pattern of FIG. 5.
FIG. 7 illustrates an arrangement of second patterns, third patterns, and a common loop, and an arrangement of the connection lines of the patterns, in the pattern of FIG. 5.
FIG. 8 illustrates an example of arranging a multi-input pad, a display panel, and a power coil, according to the present inventive concept.
FIGS. 9A and 9B illustrates another example of arranging a multi-input pad, a display panel, and a power coil, according to the present inventive concept.
FIGS. 10A and 10B illustrates another example of arranging a multi-input pad, a display panel, and a power coil, according to the present inventive concept.
FIGS. 11A, 11B, 11C, and 11D are cross-sectional views of various arrangements of power coils.
FIG. 12 illustrates an example of forming a power coil pattern on a plurality of substrates and forming one power coil by overlapping the substrates to connect the patterns into one.
FIG. 13 illustrates an example of arranging the power coil at an edge portion of a substrate where sensing patterns are formed.
FIG. 14 illustrates an example of forming the power coil on a surface opposite to a surface where the sensing patterns are formed, unlike FIG. 13.
FIG. 15 illustrates an example of forming the power coil on a separate substrate and then overlapping the substrate with a multi-input pad and a display panel.

### BEST MODE

According to an aspect of the present inventive concept, a multi-input pad for simultaneously sensing a capacitive touch and an induced electromagnetic field input includes a plurality of first patterns extending in a first direction in a sensing area, a plurality of second patterns extending in a certain second direction in the sensing area, a plurality of third patterns extending in the second direction in the sensing area, at least one common loop surrounding at least a part of the sensing area, a first controller, in a capacitive touch sensing mode, determining a position of a capacitive touch by applying a voltage to one ends of the first patterns when the other ends of the first patterns are connected to the one ends of the first patterns or the other ends of the first patterns are opened and sensing a voltage appearing at the second patterns, or determining the position of the capacitive touch by applying a voltage to one ends of the second patterns when the other ends of the first patterns are connected to the one ends of the first patterns or the other ends of the first patterns are opened, and sensing a voltage appearing at the one ends of the first patterns, and a second controller, in an induced electromagnetic field sensing mode, determining an induced electromagnetic field emitting position in the second direction based on a voltage of the common loop to which the other ends of the first patterns are connected and a voltage output from the one ends of the first patterns when the other ends of the first patterns and other ends of the third patterns opposite to one ends of the third patterns are connected to the at least one common loop, or determining the induced electromagnetic field emitting position in the first direction based on a voltage of the common loop to which the other ends of the third patterns are connected and a voltage output from the one ends of the first patterns.

The at least one common loop may be connected to the other ends of the third pattern.

The third patterns may be formed on a same surface of a same substrate as the second patterns.

In the capacitive touch sensing mode, the at least one common loop may be set to receive a voltage, to be grounded, or to be opened, and the one ends of the third patterns may be set to receive a voltage, to be grounded, to be connected to the second controller, or to be opened.

In the induced electromagnetic field sensing mode, the one ends of the second patterns may be set to receive a voltage, to be grounded, to be connected to the first controller, or to be opened.

The first controller and the second controller may communicate an occupancy rate and an occupancy time of the first patterns through a mutual control communication line to independently perform the capacitive touch sensing mode and the induced electromagnetic field sensing mode in a divided time section.

An induced electromagnetic field may be emitted to a resonance circuit of an e-pen by using at least one of the first patterns, the second patterns, and the third patterns.

The multi-input pad may further include a power coil arranged to be insulated from the first patterns, the second patterns, the third patterns, and the common loop, and having a coil shape surrounding at least a part of the sensing area to emit an induced electromagnetic field to the resonance circuit of the e-pen, and a coil driver applying power to the power coil to emit the induced electromagnetic field.

The power coil may include a small-scale power coils surrounding one or some of a plural of small areas, the plurality of small areas being obtained by sectioning the sensing area.

In the induced electromagnetic field sensing mode, the at least one common loop may be commonly used or separate common loops are used as the common loop to which the other ends of the first patterns are connected and the common loop to which the other ends of the third patterns are connected.

According to an aspect of the present inventive concept, a multi-input pad for simultaneously sensing a capacitive touch and an induced electromagnetic field input includes a first layer on which a plurality of first patterns extending in a first direction in a sensing area are formed, a second layer on which a plurality of second patterns extending in a second direction in the sensing area are formed, a third layer on which a plurality of third patterns extending in the second direction in the sensing area are formed, and at least one common loop layer on which a common loop surrounding at least a part of the sensing area is formed.

The multi-input pad may further include a power coil layer on which at least one power coil pattern for emitting an induced electromagnetic field to a resonance circuit of an e-pen is formed.

At least two layers of the first layer, the second layer, the third layer, the common loop layer, and the power coil layer may be formed on both surfaces of one substrate.

At least two layers of the first layer, the second layer, the third layer, the common loop layer, and the power coil layer may be formed on one surface of one substrate in an insulated state or are stacked with an insulating layer interposed therebetween.

At least a part or whole of the common loop layer may be formed on a layer of the first layer, the second layer, the third layer, and the power coil layer, and the common loop layer may be configured such that, when the layers are overlapped, respective parts are connected to one another forming one complete loop shape, or a complete loop shape is formed on one surface of at least one of the layers.

At least two of the first layer, the second layer, the third layer, and the common loop layer may be formed on a same surface of a same substrate.

According to an aspect of the present inventive concept, a touch screen apparatus having a multi-input pad for simultaneously sensing a capacitive touch and an induced electromagnetic field input includes a multi-input pad according to any one of the above inventive concepts and a display panel layer displaying a visual image, in which the first layer, the second layer, the third layer, the common loop layer, the power coil layer, and the display panel layer of the multi-input pad are stacked in a certain order.

### MODE OF THE INVENTIVE CONCEPT

The attached drawings for illustrating preferred embodiments of the present inventive concept are referred to in order to gain a sufficient understanding of the present inventive concept, the merits thereof, and the objectives accomplished by the implementation of the present inventive concept. Hereinafter, a multi-input pad for simultaneously sensing a capacitive touch and an induced electromagnetic field input according to the present inventive concept will be described in detail by explaining preferred embodiments of the inventive concept with reference to the attached drawings. Like reference numerals in the drawings denote like elements.

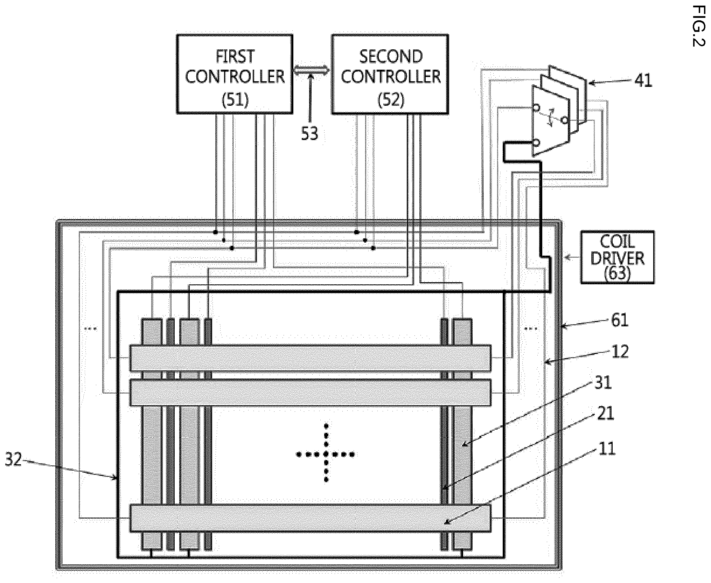

A structure of a multi-input pad for simultaneously sensing a capacitive touch and an induced electromagnetic field input according to an embodiment is described below with reference to FIG. 2. Referring to FIG. 2, the multi-input pad may include a plurality of first patterns 11, a plurality of second patterns 21, a plurality of third patterns 31, a common loop 32, a first controller 51, and a second controller 52. Furthermore, the multi-input pad may further include a first MUX 41 as a switching device.

A sensing area denotes an area where a capacitive touch input is possible by an approach or touch of a user's finger or an induced electromagnetic field input is possible by an approach or touch of an electronic pen (e-pen) that emits an induced electromagnetic field. The sensing area may be defined at a particular position of an electronic apparatus, in particular, at least a part of a surface of a display panel. In the following description, the sensing area matches an area surrounded by the common loop 32. Furthermore, the sensing area is an entire surface of a display panel.

A first direction may denote a certain linear direction in the sensing area. Furthermore, a second direction may denote another linear direction crossing the first direction. For example, the first direction may be a certain direction along an X-axis, whereas the second direction may be a direction along a Y-axis perpendicular to the X-axis.

In the present inventive concept, the e-pen that performs an induced electromagnetic field input may be configured in the form of a writing instrument and may include a resonance circuit including a capacitor and an inductor.

The e-pen may include a battery and emit an induced electromagnetic field through a part of the e-pen, for example, a pen tip, by applying an alternating voltage to the resonance circuit by using power provided by the battery. Furthermore, the e-pen may be connected to an external power in a wired manner and may operate by receiving power directly from the external power and emitting an induced electromagnetic field.

In the present inventive concept, instead of including a separate battery or receiving power in a wired manner, the e-pen may be configured to generate an induced voltage as the resonance circuit resonates with an induced electromagnetic field generated outside, store the generated induced voltage in the capacitor, and emit an induced electromagnetic field from the resonance circuit according to the induced voltage stored in the capacitor when the externally generated induced electromagnetic field is removed. Such an e-pen is referred to as a battery-free e-pen.

The first patterns 11 are conductive patterns extending in the first direction in the sensing area.

The first patterns 11 may have a variety of shapes, for example, a rod shape having a certain width, a shape having a width that continuously varies, and a shape of an array connecting vertices of a particular figure. Furthermore, the first patterns 11 may have not only a shape extending along a straight line, but also a shape bending along a certain regular curve like a sine wave or along various free curves.

The first patterns 11 may be plurally arranged in the second direction. In this state, the first patterns 11 may be parallelly arranged with an interval at least in the sensing area, and may be insulated from each other and also from other patterns, for example, the second patterns 21.

In the present inventive concept, the first patterns 11 senses a capacitive touch of a user's finger, and an example of the first patterns 11 formed in a linear band shape in the first direction is described.

The second patterns 21, which are conductive patterns extending in the second direction in the sensing area, may have a shape similar to the first patterns 11 or have a different shape. In the present embodiment, an example of the second patterns 21 formed in a linear band or wire shape in the second direction is described.

The second patterns 21 may be plurally arranged in the first direction to be parallelly with a certain interval at least in the sensing area. The second patterns 21 are insulated from each other, from other patterns, in particular, the first patterns 11, and from other patterns other than the first patterns 11. Furthermore, the second patterns 21 overlap the first patterns 11 in the sensing area.

As the first patterns 11 are formed one surface of a substrate, in particular, a transparent film substrate, and the second patterns 21 are formed on the opposite surface, the respective patterns may overlap each other while being insulated from each other. Alternatively, the first patterns 11 may be formed on any one film substrate and the second patterns 21 are formed on another film substrate and then the film substrates are overlapped with each other. Also, the first and second patterns 11 and 21 may be insulated from each other and may overlap each other in a method of forming the first patterns 11 on any one surface of a substrate, forming an insulating layer by coating an insulating material, and forming the second patterns 21 on the insulating layer.

The first patterns 11, which may be, for example, an electrode pattern for sensing a capacitive finger touch, may be a TX pattern emitting an alternating electric field to the outside of the pattern according to an application of a TX signal.

Also, the second patterns 21 may be an RX pattern that receives an alternating electric filed (TX signal) emitted from the TX pattern and outputs an RX signal.

The TX signal may be an alternating voltage having a certain frequency. When the alternating voltage is applied a TX pattern, the TX pattern emits an alternating voltage having the above frequency. The emitted alternating electric field may be input to the RX pattern. When an electric field absorbing object, such as a finger, approaches the TX pattern or the RX pattern, part of the alternating electric field input from the TX pattern to the RX pattern is absorbed by the electric field absorbing object and thus the RX pattern outputs an EX signal corresponding to a changed alternating electric field.

In this state, the position of the electric field absorbing object may be determined by using the positions of the TX pattern and the RX pattern at a location where the alternating electric field is changed. Furthermore, an approach, a contact, or an approach distance may be determined by using the amount of the changed alternating electric field.

The electric field absorbing object may be not only a human body, in particular, a finger, but also an electronic apparatus grounded or including a certain electric field absorbing circuit.

Although, in the above description, the first patterns 11 are TX patterns and the second patterns 21 are RX patterns, it may be configured that a TX signal is applied to the second patterns 21 and the first patterns 11 outputs an RX signal.

Furthermore, in a positional relation, the first patterns 11 may be located in a lower side and the second patterns 21 may be located above the first patterns 11. Reversely, the second patterns 21 may be located in the lower side and the first patterns 11 are located above the second patterns 21.

The third patterns 31 are a plurality of conductive patterns arranged in the sensing area in the second direction between the second patterns 21, which are insulated from the first patterns 11 and the second patterns 21.

The common loop 32 is a conductive pattern in a loop shape surrounding at least the sensing area, and a ground voltage or a voltage having a certain value may be applied to the common loop 32. Furthermore, the common loop 32 may be set to a floating state in which no voltage is applied.

The common loop 32 is arranged by being insulated from the other patterns. However, other ends of the third patterns 31 may be connected to the common loop 32.

In other words, the other ends of the third patterns 31 are connected to one side of the common loop 32, and one ends of the third patterns 31 extend across the sensing area and further across the other side of the common loop 32 to the outside of the sensing area. The common loop 32 and the third patterns 31 are insulated from each other at a portion crossing the other side of the common loop 32.

The first patterns 11, the second patterns 21, the third patterns 31, and the common loop 32 may be formed on separate substrates. The substrates may be transparent substrates or flexible film substrates. The second patterns 21 and the third patterns 31 may be simultaneously formed on one substrate parallel to each other.

Furthermore, a pattern of the common loop 32 may be formed on the substrates where the first patterns 11, the second patterns 21, the third patterns 31, and the common loop 32 are formed, by being divided into at least two or more parts. When all substrates are overlapped with one another, the at least parts are connected to form the common loop 32.

Furthermore, the pattern of the common loop 32 may be formed by forming one around the first patterns 11 and another around the third patterns 31, thereby providing a separate common loop for each pattern. The separate common loops formed as above may be independently controlled in an insulated state or may be connected at the same electric potential.

At least two of the first patterns 11, the second patterns 21, the third patterns 31, and the common loop 32 may be formed on the same surface of one substrate or on opposite surfaces of one substrate.

Although, in the above description, each of the third patterns 31 is arranged between the second patterns 21, this means that the second patterns 21 and the third patterns 31 may be formed on the same surface of one substrate. When the second patterns 21 and the third patterns 31 are formed on separate substrates, it is not necessary that each of the third patterns 31 is arranged between the second patterns 21. Furthermore, even when the second patterns 21 and the third patterns 31 are formed on the same surface of one substrate, it is not necessary that each of the third patterns 31 is arranged between the second patterns 21. The second patterns 21 may be arranged surrounding the third patterns 31 or the third patterns 31 may be arranged surrounding the second patterns 21.

The first controller 51 is a controller for sensing a capacitive touch and, in a capacitive touch sensing mode, may sense an approach or touch of a finger or an e-pen, which is grounded or includes a circuit of absorbing an alternating electric field, to the sensing area, and output information about a coordinate of the position of a sensed touch.

To this end, the first controller 51 opens the other end of each of the first patterns 11 or connects the other end of each of the first patterns 11 to one end thereof, and applies a certain voltage, i.e., a TX signal, to any one of or a plurality of the first patterns 11. The first controller 51 senses a voltage, i.e., an RX signal, output from any one of or a plurality of the second patterns 21.

When a position is identified at which the properties, for example, amplitude or frequency, of a sensed RX signal is changed, the first pattern and the second pattern corresponding to the position may be determined to be the position of the capacitive touch.

The second controller 52, which is a controller for sensing an induced electromagnetic field input, in an induced electromagnetic field sensing mode, includes the resonance circuit and may output information about a coordinate of the position when the e-pen emitting an induced electromagnetic field approaches or touches the sensing area.

In other words, the second controller 52 selects one of the other ends of each of the first patterns 11 and connects the selected other end to the common loop 32, and compares the voltage of the common loop 32 with an induced voltage output from one end corresponding to the selected other end, thereby sensing the position of e-pen (the position of an induced electromagnetic field output from the resonance circuit). Alternatively, the second controller 52 simultaneously connects all other ends of the first patterns 11 to the common loop 32 and selects at least one of the first patterns 11, and compares an induced voltage output from one end of the selected pattern with the voltage of the common loop 32, thereby sensing the position of e-pen.

As such, by using the first patterns as above, the position of e-pen according to the second direction may be sensed.

Next, the second controller 52 selects one of the third patterns 31 and compares an induced voltage output from the selected pattern with the voltage of the common loop 32, thereby sensing the position of e-pen. As such, by using the third patterns 31 as above, the position of e-pen according to the first direction may be sensed.

While a touch is sensed in the capacitive touch sensing mode and the position of e-pen in the second direction is sensed in the induced electromagnetic field sensing mode, the first patterns 11 are commonly used and thus the above operations are separately performed not to be overlapped with each other. Accordingly, the first controller 51 and the second controller 52 may be connected to each other via a mutual control communication line 53. An operation mode of each controller, and an occupancy rate and occupancy time/duration of the first patterns 11, may be notified to a counterpart via the mutual control communication line 53.

In the capacitive touch sensing mode, a particular voltage may be applied to the common loop 32 that is not in use. Alternatively, the common loop 32 may be grounded or may maintain an open state.

Furthermore, in the capacitive touch sensing mode, the third patterns 31 that are not in use may maintain a connection state to the second controller 52 or set to the open state, or a particular voltage may be applied to the third patterns 31.

Furthermore, in the induced electromagnetic field sensing mode, the second patterns 21 that are not in use may receive a particular voltage, may be grounded, may maintain a connection state to the first controller 51, or may be opened.

As an example of the switching device, the first MUX 41 may be a 2:1 MUX having two inputs and one output. One end of any one of the first patterns 11 may be connected to any one of the two inputs and a connection point of the common loop 32 may be connected to the other one of the two inputs. The other end of one of the first patterns 11 may be connected to the output. The first MUX 41 may be provided as many as the number of the first patterns 11.

The first MUX 41 may open all of the inputs and output.

A selection operation of the first MUX 41 may be controlled by the first controller 51 or the second controller 52. In other words, in the capacitive touch sensing mode, by connecting one end and the other end of each of the first patterns 11 to each other, the one end and the other end of each of the first patterns 11 are connected to each other or all are opened. In the induced electromagnetic field sensing mode, the first MUX 41 is controlled to connect the common loop 32 and the other end of one of the first patterns 11.

In detail, in the present embodiment, an example of the operations of the first controller 51 and the second controller 52 is described below.

### (1) In the capacitive touch sensing mode:

The first controller 51 notifies the second controller 52 of the execution of a capacitive touch sensing mode and occupancy of the first patterns 11. The second controller receiving the notification prepares for the induced electromagnetic field sensing operation.

As the operation of the first MUX 41 is controlled by a certain controller to select one ends of the first patterns 11 as the output, the one ends and the other ends of the first patterns 11 are connected to each other forming a loop. Furthermore, the first MUX 41 may be controlled to open all inputs and output.

In this state, the common loop 32 may receive a particular voltage, may be grounded, or may be opened.

Furthermore, the third patterns 31 may receive a particular voltage or may be grounded. Furthermore, the third patters 31 may maintain a connection state to the second controller 52 or may be opened.

In this state, the first controller 51 may apply a TX signal to any one of or a plurality of the first patterns 11, receive an RX signal by selecting one of or a plurality of the second patterns 21, and determine the position of a capacitive touch based on the received RX signal.

Accordingly, by connecting both ends of the first patterns 11 so that the one ends of the first patterns 11 are selected as the output, double routing is implemented in which the TX signal is simultaneously applied to the one ends and the other ends of the first patterns 11.

### (2) In the induced electromagnetic field sensing mode:

The second controller 52 notifies the first controller 51 of the execution of the induced electromagnetic field sensing mode and occupancy of the first patterns 11. The first controller 51 receiving the notification prepares for the capacitive sensing operation.

Furthermore, the second patterns may receive a particular voltage, may be grounded, may be connected to the first controller 51, or may be opened.

The operation of the first MUX 41 is controlled by a certain controller so that the other ends of the first patterns 11 are connected to the common loop 32. In other words, the first MUX 41 is controlled to select the ends of the first patterns 11 connected to the common loop 32 as the output.

In this state, the second controller 52 selects one end of one of the first patterns 11, compares electric potential difference between an induced voltage at the selected one end with the voltage of the common loop 32, and determines a divergent position, that is, an approach position of the e-pen having the resonance circuit, of an induced electromagnetic field based on the selected first pattern 11. The selection of the first patterns 11 may be processed such that patterns adjacent to a particular reference position are selected one by one or patterns are selected from the reference position in a certain order.

The second controller 52 performs an induced electromagnetic field sensing operation by using the third patterns 31 simultaneously with or alternately with an induced electromagnetic field sensing operation by using the first patterns 11. The second controller 52 selects any one of the third patterns 31 and compares a sensed induced voltage with the electric potential of the common loop 32, and may determine a position where an induced electromagnetic field is emitted, based on the selected third pattern.

A two-dimensional coordinate of the e-pen in the sensing area may be generated by combining the position determined by the first patterns 11 and the position determined by the third patterns 31.

The multi-input pad according to the present embodiment is configured to add the third patterns 31 for sensing the e-pen only between the second patterns (RX patterns) 21 having a certain degree of space between patterns, among the electrode patterns for sensing a capacitive touch, and in the case of the first patterns (TX patterns) 11 having no space between patterns, to use the first MUX 41 that is a switching device to selectively connect one ends of the first patterns 11 to the common loop 32 or open the one ends, to be also used as an antenna pattern for sensing the e-pen.

According to the above structure, since the width of a pattern may be increased as large as possible at least for the first patterns (TX patterns) 11, sensitivity in touch sensing may be maintained.

Furthermore, since both the capacitive touch and the induced electromagnetic field input may be sensed by using the first patterns 11, a bezel width for connection lines may be reduced because there is no increase in the number of the connection lines in forming an additional pattern.

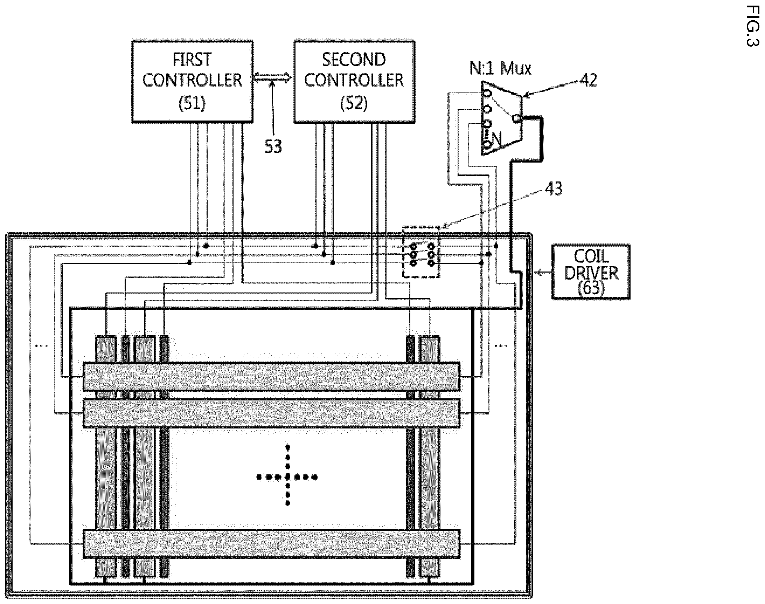

FIG. 3 illustrates a structure of a multi-input pad for simultaneously sensing a capacitive touch and an induced electromagnetic field input, according to another embodiment. Referring to FIG. 3, the multi-input pad according to the present embodiment may include a second MUX 42 functioning as a switching device of another type and a switch array 43.

The switch array 43 is used to allow a feedback connection or open the connection in a structure of feedback connecting one ends of the first patterns 11 to the other ends thereof.

The switch array 43 is controlled to connect the one ends and the other ends of the first patterns 11 in one-to-one correspondence, in the capacitive touch sensing mode, and to open the connection between the one ends and the other ends of the first patterns 11 in the induced electromagnetic field sensing mode.

In the second MUX 42, connection points to loops formed by the first patterns 11 are inputs and a connection point to the common loop 32 is an output. The second MUX 42 may have inputs corresponding to the number of the first patterns 11.

In the capacitive touch sensing mode, the second MUX 42 may be controlled to open all inputs or maintain the same state as an open state by setting all inputs to a high impedance.

The TX signal may be applied to any one of or a plurality of the first patterns 11.

When the switch array 43 connects the one ends and the other ends of the first patterns 11 to each other, double routing in which the TX signal is applied to both ends of each of the first patterns 11 may be implemented. When the switch array 43 is all opened, single routing in which the TX signal is applied to only one ends of the first patterns 11 may be implemented.

Next, in the induced electromagnetic field sensing mode, the second MUX 42 may be controlled to connect all inputs as the output or one or a plurality of inputs as the output. Accordingly, the other ends of the first patterns 11 may be connected to the common loop 32.

The above control operation may be processed by any one or both of the first controller 51 and the second controller 52 in cooperation with each other according to a mutual protocol set on the first controller 51 and/or the second controller 52. Alternatively, the control operation may be processed by a separate control device.

In the structure, the selected first pattern passes across the common loop 32 and thus the selected first pattern outputs an induced voltage due to the induced electromagnetic field emitted from the e-pen.

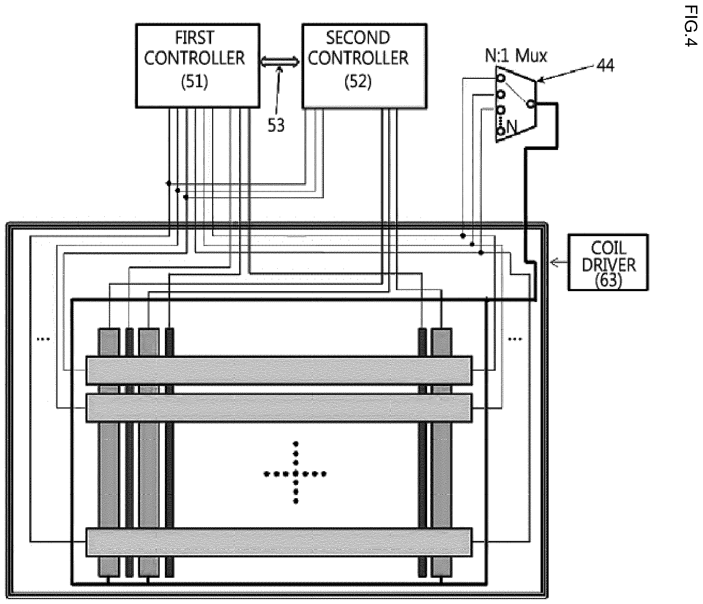

Next, referring to FIG. 4, the structure of a multi-input pad for simultaneously sensing a capacitive touch and an induced electromagnetic field input, according to another embodiment is described below.

The structure of the present embodiment is different from the structure of the embodiment of FIG. 3 in that the switch array is removed and each of the one ends and each of the other ends of the first patterns 11 are input to the first controller 51. A third MUX 44 that is a switching device is the same as the second MUX 42.

According to the above structure, the other ends of the first patterns 11 may be connected to the one ends thereof or may be opened under the control of the first controller 51, without adding the switch array 43.

In other words, in the capacitive touch sensing mode, the first controller 51 connects the other ends of the first patterns 11 to the one ends thereof (double routing) or opens the other ends (single routing), or opens all input and output of the third MUX 44.

In the induced electromagnetic field sensing mode, the first controller 51 opens all the other ends of the first patterns 11, and the third MUX 44 is controlled to connect a certain other end to the common loop 32.

A multi-input pad according to another embodiment may further include a power coil 61 and a coil driver 63 for driving the power coil 61. The structure is described with reference to FIGS. 2 to 4.

The power coil 61 supplies energy by using the induced electromagnetic field to the e-pen including the resonance circuit from a part or an entire surface of the sensing area. The power coil 61 may be formed in a coil wound along an edge of the sensing area and may receive an alternating voltage/current corresponding to a certain frequency, in particular, the resonant frequency of the e-pen.

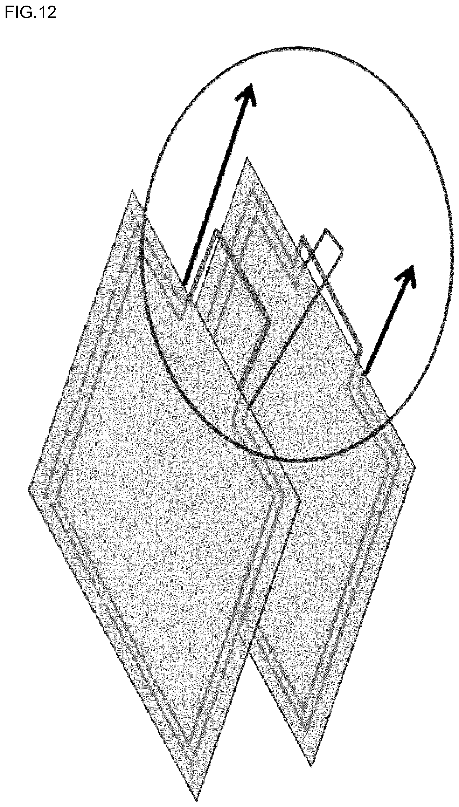

The power coil 61 may be formed in one pattern printed in a vortex shape on one substrate. Also, the power coil 61 may be formed by forming the pattern on a plurality of substrates and overlapping the substrates and connecting the patterns (see FIG. 12, for example).

The coil driver 63 supplies the alternating voltage/current. The energy supply operation of the coil driver 63 may be performed in synchronism with the induced electromagnetic field sensing mode.

The induced electromagnetic field sensing mode may be divided into an energy supply cycle of supplying energy to the e-pen via the power coil 61 according to the induced electromagnetic field, and an e-pen sensing cycle of sensing the position of the induced electromagnetic field emitted from the e-pen through the first patterns 11 and the third patterns 31. The power coil 61 may be controlled to operate only in the energy supply cycle.

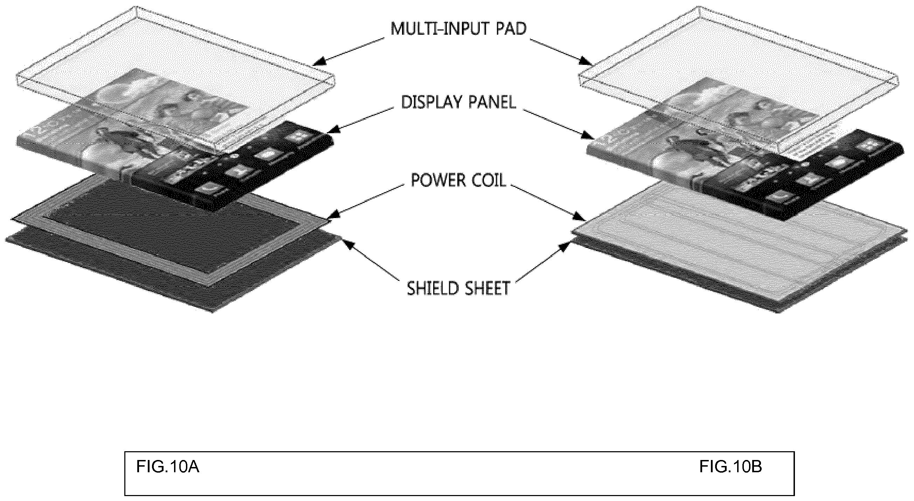

The power coil 61 may section the sensing area into a plurality of small areas, form a small-scale coil in each small area, and emit an induced electromagnetic field by applying an alternating voltage/current to each coil (see FIG. 10B, for example).

The power coil 61 may be employed when the e-pen for inputting manipulation does not include a charge device such as a battery capable of storing power for long time. The power coil 61 is added to supply energy to the resonance circuit in synchronism with an emission time when the e-pen having the resonance circuit is implemented to emit energy only for a short time.

When the e-pen includes a battery and may actively emit the induced electromagnetic field, the power coil 61 may not be provided.

The power coil 61 may be implemented by using the existing first to third patterns 11 to 31, without adding a separate pattern as described above. For example, by appropriately selecting one end and the other end of one or a plurality of the first patterns 11, a power coil pattern having the selected first pattern may be formed. When a particular voltage is applied to the pattern, an induced electromagnetic field is emitted through the first patterns 11.

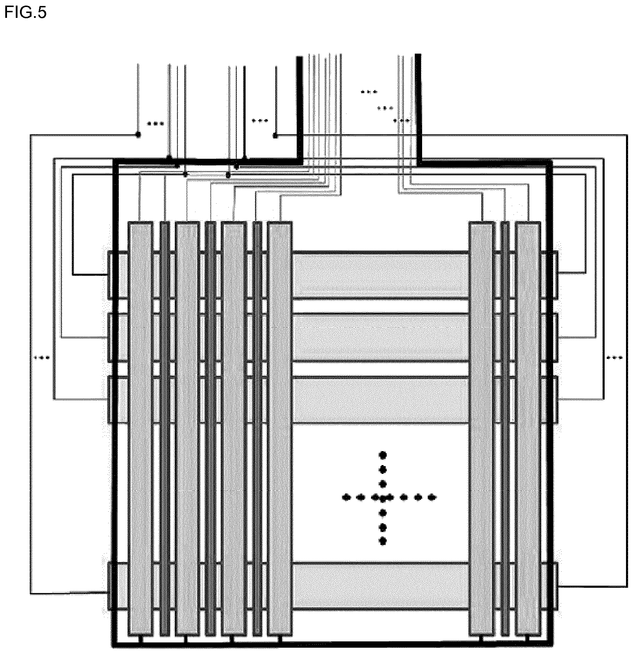

FIG. 5 to FIG. 7 illustrate the shapes of patterns for sensing a capacitive touch formed on each substrate, in a multi-input pad for sensing an induced electromagnetic field by using the patterns, according to the present inventive concept.

Referring to FIG. 5, in the multi-input pad according to the present embodiment, the shape of a pattern is obtained by overlapping substrates on which connection lines 12 are formed to connect the first patterns 11, the second patterns 21, the third patterns 31, and the pattern of the common loop 32 to devices, for example, the first controller, the second controller, the switching device, etc, corresponding to each pattern.

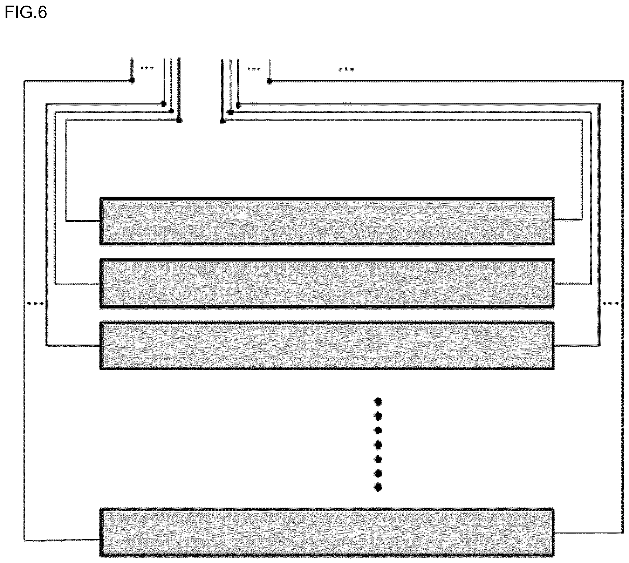

FIG. 6 illustrates the shape of a pattern of the connection lines 12 to connect the first patterns 11 and both ends of each of the first patterns 11 to each controller and the switching device, in the pattern of FIG. 5.

In the drawing, the first patterns 11 are arranged in the sensing area and each of the connection lines 12 is configured to extend to an assigned position outside the sensing area. In particular, the outside of the sensing area where the connection lines 12 are arranged forms the outside of the display panel, that is, a bezel.

The first patterns 11 may be formed in a method of printing a transparent conductive material such as ITO on a transparent substrate such as PET.

Since the first controller 51, the second controller 52, and the switching device are arranged on other substrate located outside the above substrate, the connection lines 12 appear to be cut in a form of extending outward from an end portion, that is, a connector portion at the uppermost part of the drawing, of the substrate.

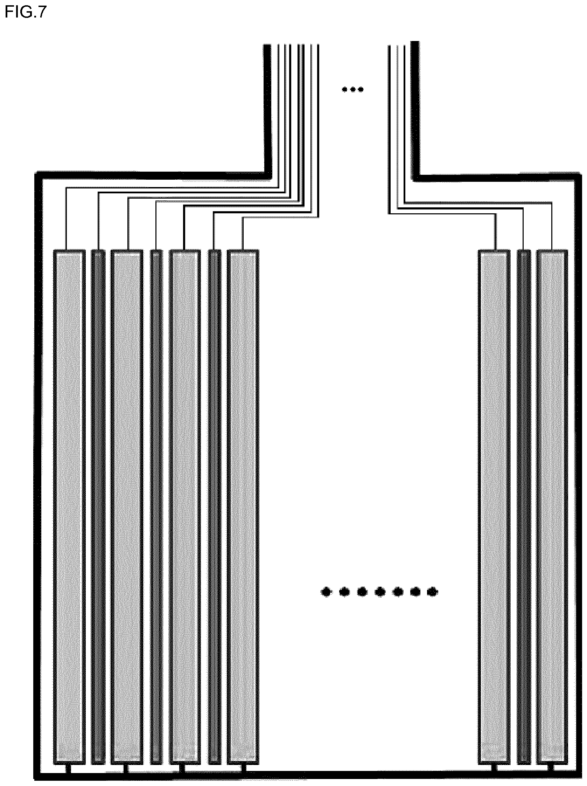

FIG. 7 illustrates an arrangement of the second patterns 21, the third patterns 31, and the common loop 32, in the pattern of FIG. 5.

In FIG. 7, the second patterns 21 and the third patterns 31 may be arranged in sensing area, and the common loop 32 may be arranged inside or outside the sensing area. The substrate may be a transparent substrate, and each pattern may be formed by a printing method using transparent conductive material.

One ends of the second patterns 21 extend to the outside of the substrate via the connection lines 12. The other ends of the second patterns 21 are in the open state. Each of one ends of the third patterns 31 is connected to the common loop 32, and the other ends of the third patterns 31 have the connection lines 12.

Since each of the controllers 51 d 52 and the switching device are arranged outside the substrate, the connection lines 12 extend to the outside via the connector portion of the substrate.

The pattern structure as illustrated in FIG. 5 may be obtained by overlapping the substrate of FIG. 6 and the substrate of FIG. 7.

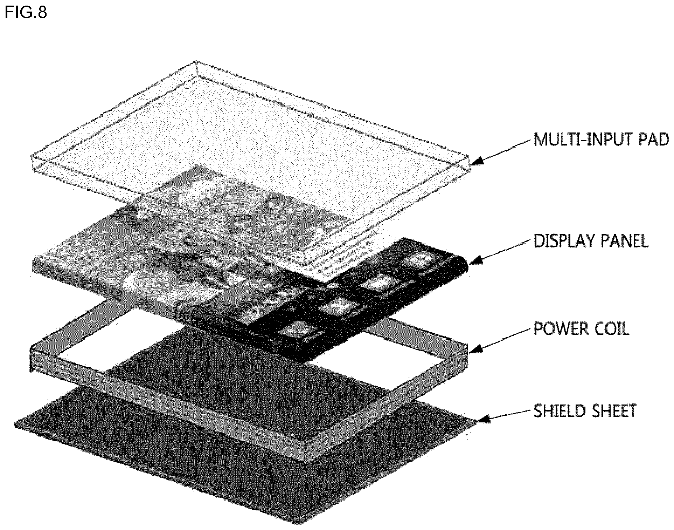

FIGS. 8 to 15 illustrate an arrangement of the multi-input pad and the display panel according to the present inventive concept. Furthermore, addition of a power coil pattern is described as well. By overlapping the multi-input pad formed of a transparent substrate and being transparent as a whole and the display panel for visually displaying a certain image with each other, an input system capable of inputting manipulation of a user's finger touch with respect to the display panel or manipulation by the e-pen may be implemented.

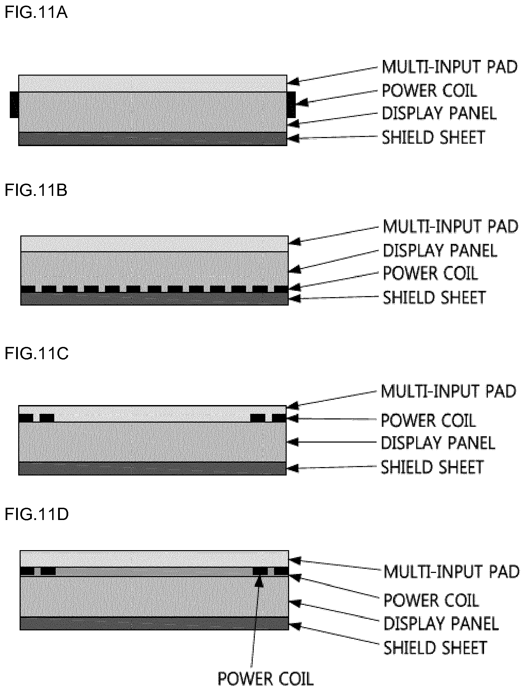

FIG. 8 illustrates an example of arranging the multi-input pad, the display panel, and the power coil according to the present inventive concept. Referring to FIG. 8, the multi-input pad is disposed above the display panel, and the power coil pattern is formed on a pipe-shaped substrate formed by rolling a band-shaped substrate to surround the side surface of the display panel (and/or the multi-input pad) (see FIGS. 11 A).

As such, by arranging the band-shaped substrate having the power coil at the side surface of the display panel, the thickness and bezel with of an entire system may be reduced so that a compact system may be implemented.

A shield sheet may be optionally included, which shields the induced electromagnetic field emitted from the power coil from radiating to the rear side.

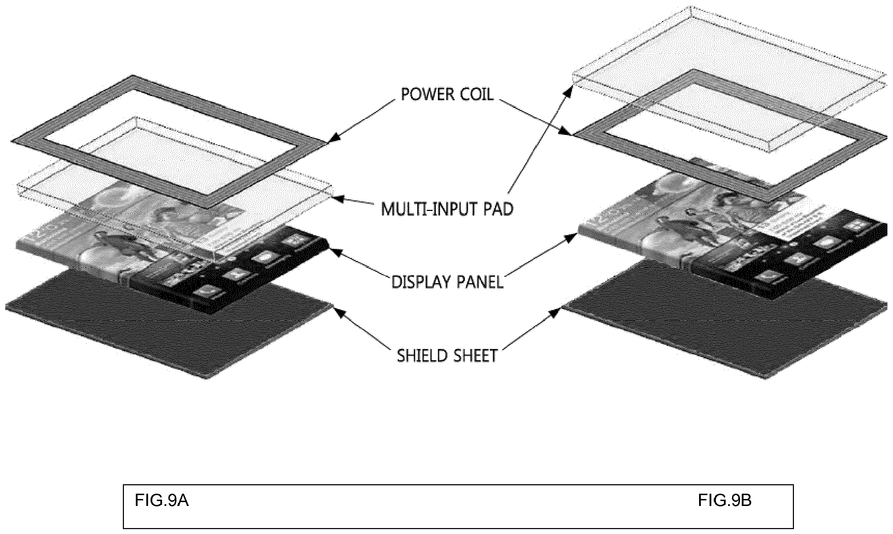

FIGS. 9A and 9B illustrate another example of arranging the multi-input pad, the display panel, and the power coil according to the present inventive concept, in which a power coil pattern is formed on a ring-shaped planar substrate. The power coil may be arranged above the multi-input pad (see FIG. 9A) or between the multi-input pad and the display panel under the multi-input pad (see FIG. 9B and further FIGS. 11 B).

FIGS. 10A and 10B illustrates another example of arranging the multi-input pad, the display panel, and the power coil according to the present inventive concept, in which the power coil is formed on the ring-shaped planar substrate and the ring-shaped planar substrate with the power coil is arranged under the multi-input pad and the display panel.

In particular, FIG. 10A illustrates an example of the power coil rolled in a single ring shape.

In FIG. 10B, for example, an area, that is, the sensing area, needing the power coil is divided into several small areas along the lengthwise direction, and the power coils are arranged such that each power coil surrounds each small area (see FIG. 11 C). In this state, the power coils may be overlapped with each other by being insulated from each other. According to the structure of combining small-scale power coils as above, a strong and uniform induced electromagnetic field may be formed in all parts of the sensing area. Accordingly, energy may be efficiently provided to the e-pen and thus sensitivity of sensing the position of e-pen is improved.

Furthermore, the power coil may be not only formed on a separate substrate, but also on a certain substrate with other sensing patterns. In other words, for example, the power coil may be printed on an upper surface of the multi-input pad as illustrated in FIG. 9A, the power coil may be printed on a lower surface of the multi-input pad as illustrated in FIG. 9B, or the power coil may be printed on a lower surface of the display panel or on an upper surface of the shield sheet as illustrated in FIG. 10A.

FIGS. 11A, 11B, 11C, and 11D are cross-sectional views illustrating various arrangements of the power coils illustrated in FIGS. 8 to 10B. FIG. 11A illustrates that the power coil is formed on a pipe-shaped substrate as illustrated in FIG. 8, and the substrate is arranged at the side surface of the display panel.

FIG. 11B illustrates that the power coil is formed on a separate planar substrate or a band-shaped substrate and arranged between the multi-input pad and the display panel. Alternatively, the power coil may be printed on the lower surface of the multi-input pad or on the upper surface of the display panel.

FIG. 11C illustrates that a pattern in which a plurality of small-scale power coils are uniformly distributed is arranged on the lower surface of the display panel. Alternatively, the power coil may be printed on the lower surface of the display panel or on the upper surface of the shield sheet.

FIG. 11D illustrates that the power coil is arranged by adding a separate power coil layer having the power coil. In other words, the power coil is not simultaneously formed on other layer, but on a separate substrate, and the substrate may be interposed between any of the multi-input pad, the display panel and the shield sheet.

In addition to the above structural examples, power coils of other types and arrangement methods may be applied to any structure in which the power coil is capable of efficiently emitting electromagnetic waves to the entire sensing area.

FIG. 12 illustrates that the power coil pattern is formed on a plurality of substrates and the substrates are overlapped with each other so that the patterns are connected into one forming one power coil. As illustrated in FIG. 12, a power coil pattern is formed on each of at least two substrates and the substrates are overlapped with each other. Accordingly, as both ends of the patterns are connected to each other and thus a power coil pattern having an incorporated pattern.

When a coil pattern is formed by printing a conductive material on a substrate, the pattern is printed only in one layer so that the number of turns of a coil to be printed is limited. However, as described above, by forming each pattern on a plurality of substrates and connecting the patterns to each other, a power coil with an increased number of turns in a multilayer may be obtained.

In each substrate, both end portions of a printed pattern extend to the outside of the substrate at the connector portion and the patterns extending through the connector portion may be connected to each other at a separate substrate.

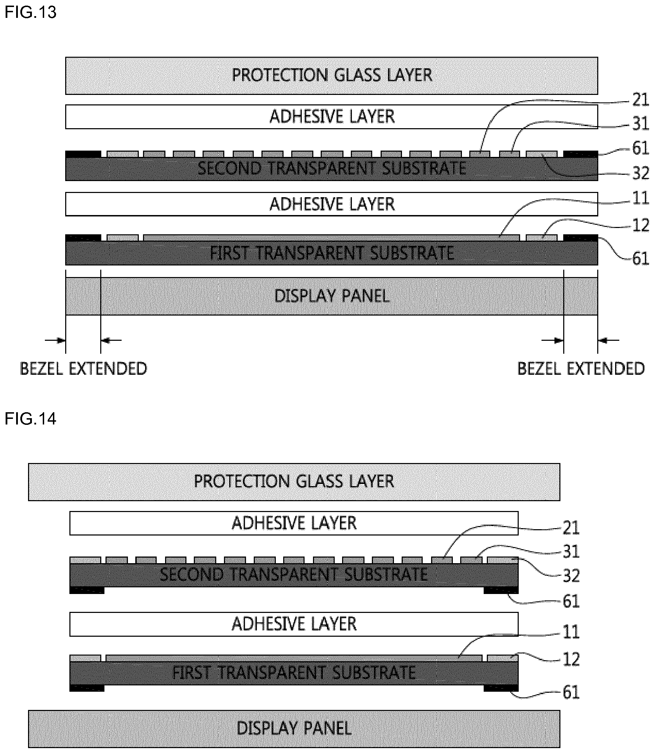

FIGS. 13 to 15 are cross-sectional views illustrating an overlapping state of the substrates where the patterns are formed and an arrangement of the power coil, as illustrated in FIGS. 6 and 7.

FIG. 13 illustrates that the power coil is arranged along an edge portion around the substrate where the sensing patterns, that is, the first and second patterns and the third patterns are formed. According to the illustrated example, the display panel is arranged and a first transparent substrate where the first patterns 11 to which a TX signal is applied for sending a finger touch is arranged. In the substrate, the connection line pattern 12 for connecting both ends of the first patterns 11 to the switching device may be formed outside the first patterns 11. At least some of the patterns for forming the power coil 61 may be arranged outside the connection lines 12.

The second patterns 21 for outputting an RX signal for sending a finger touch and a second transparent substrate where the third patterns 31 for sending an e-pen are alternately formed are arranged on the first transparent substrate. In the substrate, at least part of the pattern of the common loop 32 may be formed outside the second patterns 21 and the third patterns 31. Furthermore, a pattern for forming the power coil 61 may be arranged outside the common loop 32.

An adhesive layer may be arranged between the transparent substrates, and further between each substrate and other element, for example, the display panel and/or a protection glass layer.

Furthermore, the power coil pattern of the first transparent substrate and the power coil pattern of the second transparent substrate may be individually connected to the coil driver 63 or may be connected to each other forming one power coil and then connected to the coil driver 63.

The forming of the power coil pattern outside the sensing patterns, for example, the first pattern, the second pattern, the third pattern, the common loop pattern, and the connection line pattern, of the transparent substrate has a merit of forming various patterns by simply printing the patterns on only n one surface of the transparent substrate. However, as all patterns are formed on one surface only, a large planar area is needed. Accordingly, a bezel area is enlarged by the connection line and power coil patterns which are not necessary elements for forming the sensing area.

FIG. 14 illustrates an example of arranging the power coil at an edge portion of the substrate where the sensing patterns are formed, in which the power coil is formed on a surface opposite to the surface where the sensing patterns are formed unlike FIG. 13. According to the illustrated example, the display panel is arranged and then a first transparent substrate is arranged above the display panel, in which the first patterns 11 and the connection lines 12 are formed on an upper surface of the first transparent substrate and at least part of the power coil 61 is formed on the opposite surface thereto.

A second transparent substrate is arranged above the first transparent substrate, in which the second patterns 21 and the third patterns 31 and the common loop 32 are formed on an upper surface of the second transparent substrate and at least part of the power coil 61 is formed on the opposite surface thereto.

In this state, the patterns on the upper surface of the first transparent substrate and the power coil pattern on the lower surface of the second transparent substrate are insulated from each other. To this end, an adhesive layer may be interposed therebetween.

The power coil pattern formed on the first transparent substrate and the power coil pattern formed on the second transparent substrate may be connected to each other.

According to the above structure, a separate area for forming the power coil is not needed so that the bezel area may be reduced.

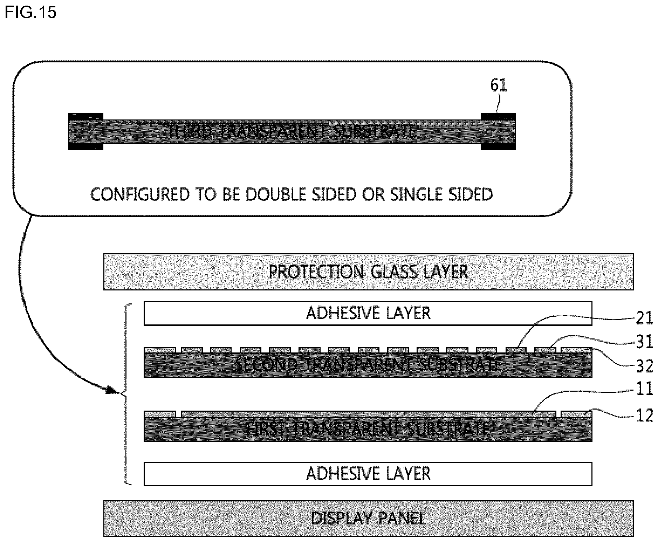

FIG. 15 illustrates an example of forming the power coil on a separate substrate and then combining the substrate with the multi-input pad and the display panel. Referring to FIG. 15, a power coil pattern is formed in various methods on one surface or both surfaces of a third transparent substrate formed of PET and the substrate is inserted at a certain position between the multi-input pad and the display panel.

According to the above structure, since the power coil pattern may be separately formed from the sensing patterns, the multi-input pad may be easily manufactured. Furthermore, since the third substrate may be inserted at the most efficient position for supplying energy to the e-pen, flexibility in designing the multi-input pad may be enhanced. Furthermore, when no power coil is needed, for example, the e-pen including a battery is in use, the third substrate may be simply removed so that an apparatus having the power coil may be easily designed.

While this inventive concept has been particularly shown and described with reference to preferred embodiments thereof, it will be understood by those of ordinary skill in the art that various changes in form and details may be made therein without departing from the spirit and scope of the inventive concept as defined by the appended claims. Therefore, the scope of the inventive concept is defined not by the detailed description of the inventive concept but by the appended claims, and all differences within the scope will be construed as being included in the present inventive concept.

### INDUSTRIAL APPLICABILITY

The present inventive concept may be used for an information technology (IT) industry.

## Claims

1. A multi-input pad for simultaneously sensing a capacitive touch and an induced electromagnetic field input, the multi-input pad comprising:
a plurality of first patterns extending in a first direction in a sensing area;
a plurality of second patterns extending in a certain second direction in the sensing area;
a plurality of third patterns extending in the second direction in the sensing area;
at least one common loop surrounding at least a part of the sensing area;
a first controller, in a capacitive touch sensing mode, determining a position of a capacitive touch by applying a voltage to one ends of the first patterns when the other ends of the first patterns are connected to the one ends of the first patterns or the other ends of the first patterns are opened and sensing a voltage appearing at the second patterns, or determining the position of the capacitive touch by applying a voltage to one ends of the second patterns when the other ends of the first patterns are connected to the one ends of the first patterns or the other ends of the first patterns are opened, and sensing a voltage appearing at the one ends of the first patterns; and
a second controller, in an induced electromagnetic field sensing mode, determining an induced electromagnetic field emitting position in the second direction based on a voltage of the common loop to which the other ends of the first patterns are connected and a voltage output from the one ends of the first patterns when the other ends of the first patterns and other ends of the third patterns opposite to one ends of the third patterns are connected to the at least one common loop, or determining the induced electromagnetic field emitting position in the first direction based on a voltage of the common loop to which the other ends of the third patterns are connected and a voltage output from the one ends of the first patterns.

2. The multi-input pad of claim 1, wherein the at least one common loop is connected to the other ends of the third pattern.

3. The multi-input pad of claim 1, wherein the third patterns are formed on a same surface of a same substrate as the second patterns.

4. The multi-input pad of claim 1, wherein, in the capacitive touch sensing mode, the at least one common loop is set to receive a voltage, to be grounded, or to be opened, and
the one ends of the third patterns is set to receive a voltage, to be grounded, to be connected to the second controller, or to be opened.

5. The multi-input pad of claim 1, wherein, in the induced electromagnetic field sensing mode, the one ends of the second patterns are set to receive a voltage, to be grounded, to be connected to the first controller, or to be opened.

6. The multi-input pad of claim 1, wherein the first controller and the second controller communicate an occupancy rate and an occupancy time of the first patterns through a mutual control communication line to independently perform the capacitive touch sensing mode and the induced electromagnetic field sensing mode in a divided time section.

7. The multi-input pad of claim 1, wherein an induced electromagnetic field is emitted to a resonance circuit of an e-pen by using at least one of the first patterns, the second patterns, and the third patterns.

8. The multi-input pad of claim 1, further comprising:
a power coil arranged to be insulated from the first patterns, the second patterns, the third patterns, and the common loop, and having a coil shape surrounding at least a part of the sensing area to emit an induced electromagnetic field to the resonance circuit of the e-pen; and
a coil driver applying power to the power coil to emit the induced electromagnetic field.

9. The multi-input pad of claim 8, wherein the power coil comprises a small-scale power coils surrounding one or some of a plural of small areas, the plurality of small areas being obtained by sectioning the sensing area.

10. The multi-input pad of claim 1, wherein, in the induced electromagnetic field sensing mode, the at least one common loop is commonly used or separate common loops are used as the common loop to which the other ends of the first patterns are connected and the common loop to which the other ends of the third patterns are connected.

11. A multi-input pad for simultaneously sensing a capacitive touch and an induced electromagnetic field input, the multi-input pad comprising:
a first layer on which a plurality of first patterns extending in a first direction in a sensing area are formed;
a second layer on which a plurality of second patterns extending in a second direction in the sensing area are formed;
a third layer on which a plurality of third patterns extending in the second direction in the sensing area are formed; and
at least one common loop layer on which a common loop surrounding at least a part of the sensing area is formed.

12. The multi-input pad of claim 11, further comprising a power coil layer on which at least one power coil pattern for emitting an induced electromagnetic field to a resonance circuit of an e-pen is formed.

13. The multi-input pad of claim 12, wherein at least two layers of the first layer, the second layer, the third layer, the common loop layer, and the power coil layer are formed on both surfaces of one substrate.

14. The multi-input pad of claim 12, wherein at least two layers of the first layer, the second layer, the third layer, the common loop layer, and the power coil layer are formed on one surface of one substrate in an insulated state or are stacked with an insulating layer interposed therebetween.

15. The multi-input pad of claim 12, wherein at least a part or whole of the common loop layer is formed on a layer of the first layer, the second layer, the third layer, and the power coil layer, and the common loop layer is configured such that, when the layers are overlapped, respective parts are connected to one another forming one complete loop shape, or a complete loop shape is formed on one surface of at least one of the layers.

16. The multi-input pad of claim 1, wherein at least two of the first layer, the second layer, the third layer, and the common loop layer are formed on a same surface of a same substrate.

17. A touch screen apparatus having a multi-input pad for simultaneously sensing a capacitive touch and an induced electromagnetic field input, the touch screen apparatus comprising:
a multi-input pad according to any one of claims 11; and
a display panel layer displaying a visual image,
wherein the first layer, the second layer, the third layer, the common loop layer, the power coil layer, and the display panel layer of the multi-input pad are stacked in a certain order.
